(19) Europäisches Patentamt / European Patent Office / Office européen des brevets

(11) **EP 4 282 825 A1**

(12) **EUROPEAN PATENT APPLICATION**
published in accordance with Art. 153(4) EPC

(43) Date of publication:
**29.11.2023 Bulletin 2023/48**

(21) Application number: **22742512.1**

(22) Date of filing: **14.01.2022**

(51) International Patent Classification (IPC):
***C01G 23/04*** *(2006.01)*

(52) Cooperative Patent Classification (CPC):
**C01G 23/04**

(86) International application number:
**PCT/JP2022/001133**

(87) International publication number:
**WO 2022/158390 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.01.2021 JP 2021009416**

(71) Applicant: **Denka Company Limited**
**Tokyo 103-8338 (JP)**

(72) Inventors:
- **KOBAYASHI Takuji**
  **Tokyo 103-8338 (JP)**
- **FUKAZAWA Motoharu**
  **Tokyo 103-8338 (JP)**
- **OKABE Takuto**
  **Tokyo 103-8338 (JP)**
- **KAWAGOE Mitsuru**
  **Tokyo 103-8338 (JP)**

(74) Representative: **Gulde & Partner**
**Patent- und Rechtsanwaltskanzlei mbB**
**Wallstraße 58/59**
**10179 Berlin (DE)**

(54) **PARTICLES HAVING SPECIFIC LOW-ORDER TITANIUM OXIDE CRYSTAL COMPOSITION, METHOD FOR PRODUCING SAME, AND DISPERSION**

(57)     A method for producing a particle, containing a step of heating a mixture containing $TiH_2$ and $TiO_2$ at 700 to 950°C, wherein a molar ratio of the $TiH_2$ to the $TiO_2$ contained in the mixture is 5.0 to 6.8.

Fig.2

EP 4 282 825 A1

## Description

### Technical Field

The present disclosure relates to a particle having a crystalline composition of $Ti_4O_7$ and $\gamma$-$Ti_3O_5$, a method for producing the same, and a dispersion.

### Background Art

It is known that a low-order titanium oxide (also referred to as reduced titanium oxide) obtained by reducing titanium dioxide shows different colors depending on the ratio of titanium and oxygen which are constituent elements, and becomes black by appropriately adjusting the ratio. Therefore, particles whose surfaces are composed of a low-order titanium oxide can be used in various applications as a pigment such as a black pigment. For example, Patent Document 1 discloses a cosmetic using a pigment exhibiting dichroism in which the color tone of the appearance color and the interference color are different from each other by forming a single layer of low-order titanium oxide on plate-like particles. In addition, Patent Document 2 discloses a black titanium dioxide powder produced using $CaH_2$ as a reducing agent for use as a black pigment or the like. Patent Document 3 discloses titanium oxynitride powder produced by reacting titanium oxide with high-temperature ammonia gas.

### Citation List

### Patent Document

Patent Document 1: Japanese Patent Application Publication No. 2010-280607
Patent Document 2: Japanese Patent Application Publication No. 2012-214348
Patent Document 3: Japanese Patent Application Publication No. 2010-30842

### Summary of Invention

### Technical Problem

The black pigment containing the low-order titanium oxide exhibits black colors of different colors, such as a reddish black color and a bluish black color, even if it is said to be entirely black. The color tone of black may change not only depending on the composition of the low-order titanium oxide as described above but also depending on the particle diameter of the pigment (particle) or the like. In addition, depending on the color tone, even the same blackness may appear bright or dark. For example, a darker color tone such as blue or green appears more black than a bright color tone such as red or yellow, even if they have the same blackness. Therefore, in order to obtain a black pigment having a desired color tone, physical properties such as particle diameter may be adjusted. However, since such physical properties may be restricted by, for example, the use of the black pigment, it is preferable to obtain a black color having a desired color tone only by adjusting the composition of the low-order titanium oxide.
Therefore, an object of one aspect of the present invention is to obtain a particle of a low-order titanium oxide having a novel crystal composition.

### Solution to Problem

The present inventors have found that when a particle containing low-order titanium oxides are produced by heating $TiH_2$ and $TiO_2$, a particle having a novel composition of low-order titanium oxides can be obtained by appropriately adjusting the mixing ratio of $TiH_2$ and $TiO_2$ and the heating temperatures. The particle has a crystalline composition composed of the specific proportions of $Ti_4O_7$ and $\gamma$-$Ti_3O_5$.
That is, one aspect of the present invention is a method for producing a particle, containing a step of heating a mixture containing $TiH_2$ and $TiO_2$ at 700 to 950°C, wherein a molar ratio of $TiH_2$ to $TiO_2$ contained in the mixture is 5.0 to 6.8. In this step, the mixture may be heated under an Ar gas atmosphere.
Another aspect of the present invention is a particle having a crystal composition composed of $Ti_4O_7$ and $\gamma$-$Ti_3O_5$, wherein a molar ratio of the $Ti_4O_7$ to the $\gamma$-$Ti_3O_5$ is 0.01 or more. The particle may have a* value of 0.2 or less and b* value of 0.0 or less in L*a*b* color space. A total content of Na, K, and P in the particle may be 2000 ppm by mass or less.

Another aspect of the present invention is a dispersion containing the above-described particle and a dispersion medium.

**Advantageous Effects of Invention**

According to an aspect of the present disclosure, a particle of a low-order titanium oxide having a novel crystal composition can be obtained. This makes it easy to adjust the black color of a dispersion containing the particle of low-order titanium oxide (for example, a resin composition containing the particle of low-order titanium oxide and a resin).

**Brief Description of Drawings**

[FIG. 1] FIG. 1 shows measurement results of X-ray diffraction in Examples 1 to 3 and Comparative Example 1.
[FIG. 2] FIG. 2 shows measurement results of X-ray diffraction in Examples 4 to 7.
[FIG. 3] FIG. 3 shows measurement results of X-ray diffraction in Examples 8 to 10 and Comparative Example 2.

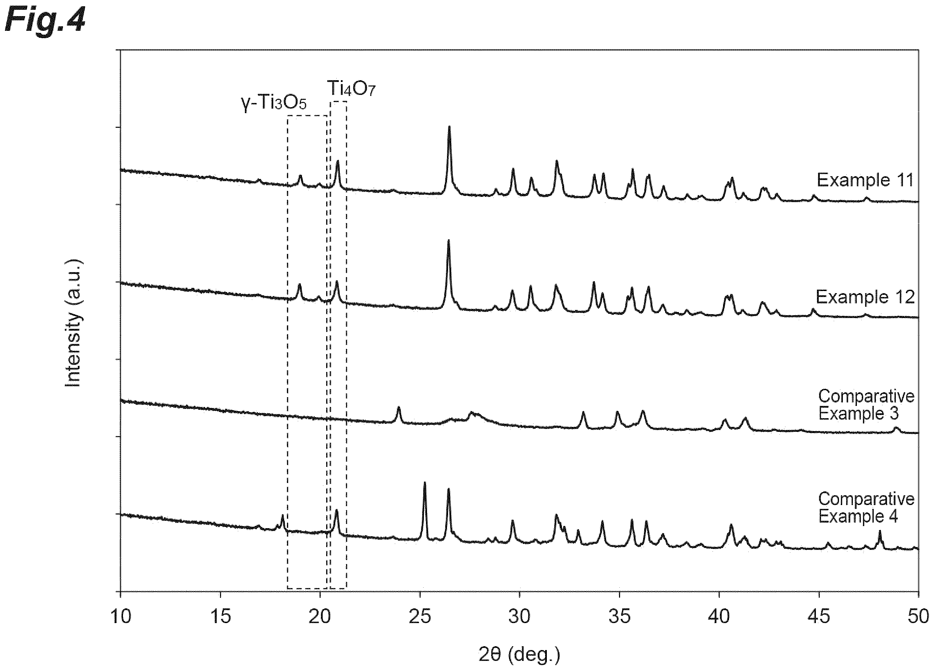

[FIG. 4] FIG. 4 shows measurement results of X-ray diffraction in Examples 11 to 12 and Comparative Examples 3 to 4.

**Description of Embodiments**

One embodiment of the present invention is a method for producing a particle (hereinafter also referred to as "low-order titanium oxide particle") having a specific crystal composition composed of $Ti_4O_7$ and $\gamma\text{-}Ti_3O_5$ (details will be described later). This method contains a step of heating a mixture containing $TiH_2$ and $TiO_2$ (heating step).

The mixture used in the heating step contains, for example, a powdered $TiH_2$ and a powdered $TiO_2$. The mixture may be, for example, a powder that is not formed into a pellet shape or the like (that contains powdered $TiH_2$ and $TiO_2$ as they are). The properties of the powdered $TiH_2$ and $TiO_2$ can be selected as appropriate. For example, the particle sizes of the powdered $TiH_2$ and $TiO_2$ are selected in accordance with the desired particle size of the low-order titanium oxide particle. The mixture may consist of $TiH_2$ and $TiO_2$, or may cconsist of $TiH_2$, $TiO_2$, and unavoidable impurities. Examples of the unavoidable impurities include $Al_2O_3$, $ZrO_2$, and C (carbon). The total amount of $TiH_2$ and $TiO_2$ in the mixture may be 90% by mass or more, 95% by mass or more, or 99% by mass or more, based on the total amount of the mixture.

The molar ratio of $TiH_2$ to $TiO_2$ contained in the mixture (content of $TiO_2$ (mol) / content of $TiH_2$ (mol)) is 5.0 to 6.8. When the molar ratio is less than 5.0, $Ti_4O_7$ is not formed in the obtained particle. In this case, the low-order titanium oxide particle tends to exhibit a blackish violet color. When the molar ratio is more than 6.8, $\gamma\text{-}Ti_3O_5$ is not formed in the obtained particle. In this case, the low-order titanium oxide particle tends to exhibit a light blackish blue green color. $\gamma\text{-}Ti_3O_5$ alone tends to be reddish, and $Ti_4O_7$ alone tends to be less blackish.

The larger the molar ratio, the higher the proportion of $Ti_4O_7$ and the lower the proportion of $\gamma\text{-}Ti_3O_5$ in the resulting particle. The lower limit of the molar ratio may be 5.1 or more, 5.2 or more, 5.3 or more, 5.4 or more, 5.5 or more, 5.6 or more, 5.7 or more, 5.8 or more, 5.9 or more, 6.0 or more, 6.1 or more, or 6.2 or more. The upper limit of the molar ratio may be 6.7 or less, 6.6 or less, 6.5 or less, 6.4 or less, 6.3 or less, 6.2 or less, 6.1 or less, 6.0 or less, 5.9 or less, 5.8 or less, 5.7 or less, 5.6 or less, or 5.5 or less.

In the heating step, the mixture is heated at 700 to 950°C in, for example, an electric furnace. As a result, the titanium dioxide is reduced to produce desired low-order titanium oxides ($Ti_4O_7$ and $\gamma\text{-}Ti_3O_5$) in the resulting particle. When the heating temperature is lower than 700°C, $Ti_4O_7$ and $\gamma\text{-}Ti_3O_5$ are not generated in the obtained particle, and for example, $Ti_nO_{2n-1}$ (n>4) may be generated. When the heating temperature is higher than 950°C, $\gamma\text{-}Ti_3O_5$ may not be produced in the obtained particle, and for example, $\alpha\text{-}Ti_3O_5$ and $\beta\text{-}Ti_3O_5$ may be produced. The upper limit of the heating temperature may be 940°C or lower, 930°C or lower, 920°C or lower, 910°C or lower, or 900°C or lower.

The mixture is heated, for example, under an inert gas atmosphere or under vacuum. The inert gas may be an Ar gas or a $N_2$ gas, and is preferably an Ar gas from the viewpoint that the low-order titanium oxide particle having a desired crystal composition can be more easily obtained (for example, generation of $TiO_x$ ($x \geq 1.75$) in the low-order titanium oxide particle can be further suppressed). When the heating of the mixture is performed under vacuum, the vacuum may be, for example, 500 Pa or less.

The heating time may be, for example, 1 hour or more, 2 hours or more, or 4 hours or more, from the viewpoint of sufficiently proceeding the reduction reaction, and may be, for example, 24 hours or less, 18 hours or less, or 12 hours or less, from the viewpoint of appropriately suppressing the growth of the lower-order titanium oxide particle and easily recovering the particle in a powder state.

In one embodiment, the method may further contain a step of washing the low-order titanium oxide particle (washing step). Impurities can be removed by the washing step. The washing is performed with, for example, at least one selected from the group consisting of a hot water, an alcohol, and an organic acid. The alcohol may be, for example, methanol, ethanol, or mixtures thereof. The organic acid may be, for example, acetic acid. From the viewpoint of being able to suppress mixing of ionic impurities such as halide ions into the low-order titanium oxide powder, washing with an organic acid is preferable.

The method preferably further contains a step of pulverizing the low-order titanium oxide particle after the heating step (pulverizing step). Examples of the pulverizing method in the pulverizing step include methods using various pulverizers such as a mortar, a ball mill, a jet mill, and a fine mill. The pulverizing step may be performed once or two or more times. When the pulverizing step is performed two or more times, the pulverizing method used in each pulverizing step may be different from each other. By performing the pulverizing step, the chromaticity and the specific surface area of the low-order titanium oxide particle can be adjusted.

When the method contains the washing step and the pulverizing step, the order of these steps is arbitrary. That is, the method may contain the heating step, the washing step, and the pulverizing step in this order, or may contain the heating step, the pulverizing step, and the washing step in this order. In the former case, a step of drying the low-order titanium oxide particle (drying step) may be further performed between the washing step and the pulverizing step. The drying temperature in the drying step may be, for example, 100°C or higher and 200°C or lower. The drying time may be, for example, 10 hours or more and 20 hours or less.

The low-order titanium oxide particle obtained by the production method described above has a crystal composition composed of $Ti_4O_7$ and $\gamma$-$Ti_3O_5$. The crystal composition composed of $Ti_4O_7$ and $\gamma$-$Ti_3O_5$ means that the crystal composition substantially consisting of $Ti_4O_7$ and $\gamma$-$Ti_3O_5$. It is confirmed that the low-order titanium oxide particle has a crystal composition composed of $Ti_4O_7$ and $\gamma$-$Ti_3O_5$, by measuring the crystal composition of the low-order titanium oxide particle by an X-ray diffraction method (XRD) and substantially observing only diffraction peaks derived from $Ti_4O_7$ and $\gamma$-$Ti_3O_5$. The low-order titanium oxide particle may be composed of a mixed phase of two crystal phases of $Ti_4O_7$ and $\gamma$-$Ti_3O_5$ in a single particle.

In the crystal composition of the low-order titanium oxide particle, the molar ratio of $Ti_4O_7$ to $\gamma$-$Ti_3O_5$ (content of $\gamma$-$Ti_3O_5$ (mol) / content of $Ti_4O_7$ (mol)) is 0.01 or more. The molar ratio may be 0.05 or more, 0.20 or more, 0.70 or more, or 1.0 or more, and may be 99 or less, 50 or less, 20 or less, 10 or less, or 5 or less. The molar ratio is calculated by the following formula:

$$\text{Molar ratio } (\gamma\text{-}Ti_3O_5/Ti_4O_7) = (M1/F1)/(M2/F2)$$

wherein M1 represents the mass fraction of $\gamma$-$Ti_3O_5$ in the low-order titanium oxide particle, F1 represents the formula mass of $\gamma$-$Ti_3O_5$ (=223.60), M2 represents the mass fraction of $Ti_4O_7$ in the low-order titanium oxide particle, and F2 represents the formula mass of $Ti_4O_7$ (=303.46).

The mass fractions of $\gamma$-$Ti_3O_5$ (M1) and $Ti_4O_7$ (M2) in the low-order titanium oxide particle are calculated by Rietveld analysis of the X-ray diffraction pattern. To be specific, the mass fractions are calculated by using Rietveld method software (for example, integrated powder X-ray analysis software PDXL2 manufactured by Rigaku Corporation), and by using 1250094 (Journal of Solid State Chemistry 3, 340 (1971)) as $Ti_4O_7$ and 1900755 (Journal of Solid State Chemistry 20, 29 (1977)) as $\gamma$-$Ti_3O_5$ from a crystal structure database (Pearson's Crystal Data).

The low-order titanium oxide particle has the above-described crystal composition and thus exhibit a black color having a specific chromaticity. The L* value of the low-order titanium oxide particle in the L*a*b* color space is preferably 13.0 or less, more preferably 12.0 or less, and even more preferably 11.0 or less, and may be, for example, 4.0 or more, 5.0 or more, or 6.0 or more. The a* value of the low-order titanium oxide particle in the L*a*b* color space is preferably -3.0 or more, more preferably -2.0 or more, and preferably 0.2 or less, more preferably 0.0 or less. The b* value of the low-order titanium oxide particle in the L*a*b* color space is preferably -8.0 or more, more preferably -6.0 or more, and even more preferably -4.0 or more, and is preferably 0.0 or less, and more preferably -2.0 or less.

The L* value, the a* value, and the b* value in the L*a*b* color space are measured by a colorimetric color difference meter (for example, ZE-2000 (manufactured by Nippon Denshoku Industries Co., Ltd.)). More specifically, after zero point correction is performed with a cylinder for dark field, standard matching is performed with a standard white plate (X=91.71, Y=93.56, Z=110.52). Next, about 3 g of the low-order titanium oxide particles are put into a round cell of 35φ×15H, and measurement is performed.

The specific surface area of the low-order titanium oxide particle may be 0.25 $m^2$/g or more, 1 $m^2$/g or more, 2 $m^2$/g or more, 3 $m^2$/g or more, or 4 $m^2$/g or more, and may be 20 $m^2$/g or less, 10 $m^2$/g or less, or 8 $m^2$/g or less. The specific surface area of the low-order titanium oxide particle is measured using a specific surface area measuring device (for example, Macsorb HM model-1201, manufactured by Mountech Co., Ltd.) under the conditions in which degassing is performed at 200°C for 10 minutes with a nitrogen gas flow (atmospheric pressure), and nitrogen gas adsorption is performed at an equilibrium relative pressure of about 0.3 under n=2 conditions.

The contents of impurities in the low-order titanium oxide particle are preferably as small as possible. The content of Al in the low-order titanium oxide particle may be preferably 200 ppm by mass or less, 50 ppm by mass or less, or 20 ppm by mass or less. The content of B in the low-order titanium oxide particle may be preferably 50 ppm by mass or less, 30 ppm by mass or less, or 10 ppm by mass or less. The content of Ba in the low-order titanium oxide particle may be preferably 50 ppm by mass or less, 10 ppm by mass or less, or 5 ppm by mass or less. The content of Ca in the low-order titanium oxide particle may be preferably 100 ppm by mass or less, 50 ppm by mass or less, or 10 ppm by mass or less. The content of Cd in the lower-order titanium oxide particle may be preferably 10 ppm by mass or less, 5 ppm by mass or less, or 2 ppm by mass or less. The content of Co in the lower-order titanium oxide particle may be preferably 10 ppm by mass or less, 5 ppm by mass or less, or 2 ppm by mass or less. The content of Cr in the low-order titanium oxide particle may be preferably 100 ppm by mass or less, 10 ppm by mass or less, or 5 ppm by mass or less. The content of Cu in the low-order titanium oxide particle may be preferably 200 ppm by mass or less, 50 ppm by mass or less, or 10 ppm by mass or less. The content of Fe in the low-order titanium oxide particle may be preferably 200 ppm by mass or less, 50 ppm by mass or less, or 10 ppm by mass or less. The content of K in the low-order titanium oxide particle may be preferably 100 ppm by mass or less, 5 ppm by mass or less, or 1 ppm by mass or less. The content of Li in the lower-order titanium oxide particle may be preferably 20 ppm by mass or less, 2 ppm by mass or less, or 0.5 ppm by mass or less.

The content of Mg in the lower-order titanium oxide particle may be preferably 100 ppm by mass or less, 10 ppm by mass or less, or 1 ppm by mass or less. The content of Mn in the lower-order titanium oxide particle may be preferably 10 ppm by mass or less, 5 ppm by mass or less, or 2 ppm by mass or less. The content of Mo in the low-order titanium oxide particle may be preferably 10 ppm by mass or less, 5 ppm by mass or less, or 2 ppm by mass or less. The content of Na in the low-order titanium oxide particle may be preferably 50 ppm by mass or less, 10 ppm by mass or less, 5 ppm by mass or less, or 2 ppm by mass or less. The content of Ni in the low-order titanium oxide particle may be preferably 50 ppm by mass or less, 20 ppm by mass or less, or 10 ppm by mass or less. The content of P in the low-order titanium oxide particle may be preferably 200 ppm by mass or less, 30 ppm by mass or less, 10 ppm by mass or less, or 5 ppm by mass or less. The content of Pb in the low-order titanium oxide particle may be preferably 50 ppm by mass or less, 5 ppm by mass or less, or 2 ppm by mass or less. The content of Sb in the low-order titanium oxide particle may be preferably 100 ppm by mass or less, 20 ppm by mass or less, 10 ppm by mass or less, or 2 ppm by mass or less. The content of Si in the low-order titanium oxide particle may be preferably 1000 ppm by mass or less, 100 ppm by mass or less, 30 ppm by mass or less, 20 ppm by mass or less, or 2 ppm by mass or less. The content of Zn in the lower-order titanium oxide particle may be preferably 100 ppm by mass or less, 10 ppm by mass or less, or 2 ppm by mass or less. The content of Zr in the lower-order titanium oxide particle may be preferably 100 ppm by mass or less, 20 ppm by mass or less, or 2 ppm by mass or less.

The total content of Na, K, and P in the lower-order titanium oxide particle may be preferably 2000 ppm by mass or less, 1000 ppm by mass or less, 500 ppm by mass or less, or 100 ppm by mass or less. For example, the total content of Pb, Cd, and Cr may be preferably 200 ppm by mass or less, 100 ppm by mass or less, 50 ppm by mass or less, or 30 ppm by mass or less. The contents of impurities in the low-order titanium oxide particle are measured by Agilent 5110ICP-OES (manufactured by Agilent Technologies, Inc.).

The above-described low-order titanium oxide particle is suitably used as a pigment (colored filler) such as a black pigment. Such a pigment (colored filler) is suitably used as a coloring agent including, for example, cosmetics, electronic components such as semiconductors, and paints such as paints and inks.

When the low-order titanium oxide particles are used in the above-described application, the low-order titanium oxide particles are used by being dispersed in a dispersion medium, for example. That is, another embodiment of the present invention is a dispersion containing the above-described low-order titanium oxide particles and a dispersion medium dispersing the low-order titanium oxide particles.

The dispersion medium is appropriately selected depending on the application of the dispersion, and may be, for example, water, an alcohol, a ketone, an ester, a resin, or the like. Examples of the resin include an epoxy resin, a silicone resin, a phenol resin, a melamine resin, an urea resin, an unsaturated polyester, a fluororesin, a polyimide, a polyamideimide, a polyetherimide, a polybutylene terephthalate, a polyethylene terephthalate, a polyphenylene sulfide, a wholly aromatic polyester, a polysulfone, a liquid crystal polymer, a polyethersulfone, a polycarbonate, a maleimide-modified resin, an ABS (acrylonitrile butadiene styrene) resin, an AAS (acrylonitrile acrylic rubber styrene) resin, an AES (acrylonitrile ethylene propylene diene rubber styrene) resin, and the like.

The content of the low-order titanium oxide particles in the dispersion is appropriately selected depending on the application of the dispersion, and, for example, may be 5% by mass or more and may be 90% by mass or less, based on the total amount of the dispersion. The content of the dispersion medium in the dispersion is appropriately selected depending on the application of the dispersion, and, for example, may be 10% by mass or more and may be 95% by mass or less, based on the total amount of the dispersion.

**Examples**

Hereinafter, the present invention will be described in more detail based on examples, but the present invention is not limited to the following examples.

<Production of low-order titanium oxide particle>

[Example 1]

10 g of $TiO_2$ powder (manufactured by Toho Titanium, HT0514: purelity of 99.9%) and 1.249 g of $TiH_2$ powder (manufactured by Tohotech, TCH450: purelity of 99.8%) were mixed ($TiO_2/TiH_2$ = 5.0/1 (molar ratio)) in an Eirich mixer (manufactured by Nippon Eirich Co., Ltd.) to obtain a mixture. This mixture was transferred to an alumina crucible and heated for 12 hours in an electric furnace (HIMULTI 10000 manufactured by Fuji Electric Wave Industry Co., Ltd.) in a state in which the temperature was raised to 900°C at 10 °C/min under an Ar atmosphere. After heating, the obtained powder was pulverized in a mortar for 5 minutes to obtain black low-order titanium oxide particles.

[Examples 2 to 10]

Black low-order titanium oxide particles were obtained in the same manner as in Example 1 except that the amount of the powder of $TiH_2$ was changed so that the molar ratio of $TiO_2$ to $TiH_2$ ($TiO_2/TiH_2$) was as shown in Table 1.

[Example 11]

Black low-order titanium oxide particles were obtained in the same manner as in Example 6 except that the heating time was changed to 4 hours.

[Example 12]

Black low-order titanium oxide particles were obtained in the same manner as in Example 6 except that the heating temperature was changed as shown in Table 1.

[Comparative Examples 1 and 2]

Particles were obtained in the same manner as in Example 1 except that the amount of the powder of $TiH_2$ was changed so that the molar ratio of $TiO_2$ to $TiH_2$ ($TiO_2/TiH_2$) was as shown in Table 1.

[Comparative Examples 3 and 4]

Particles were obtained in the same manner as in Example 6 except that the heating temperature was changed as shown in Table 1.

<X-ray diffraction measurement>

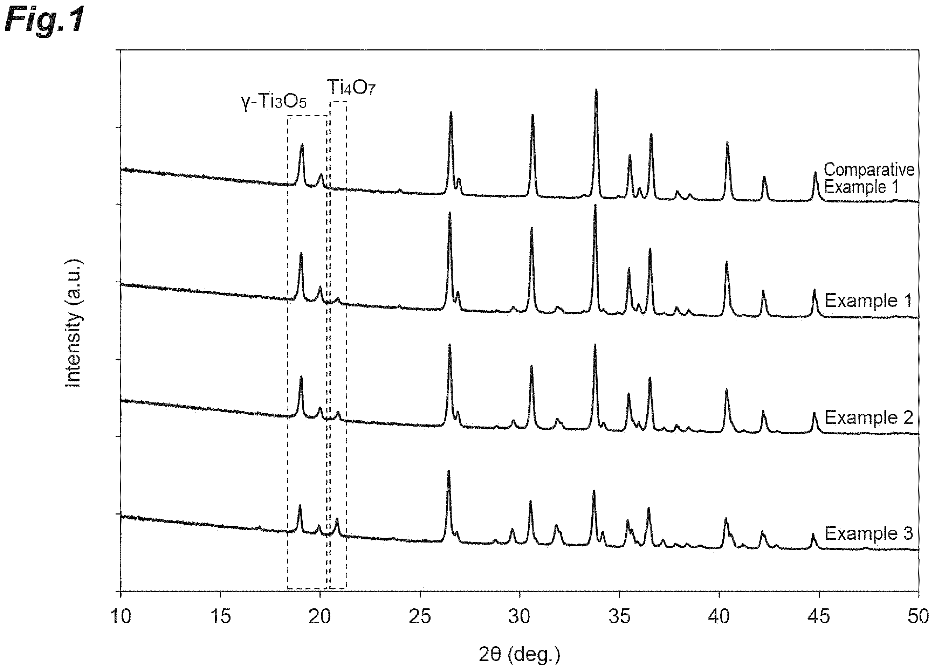

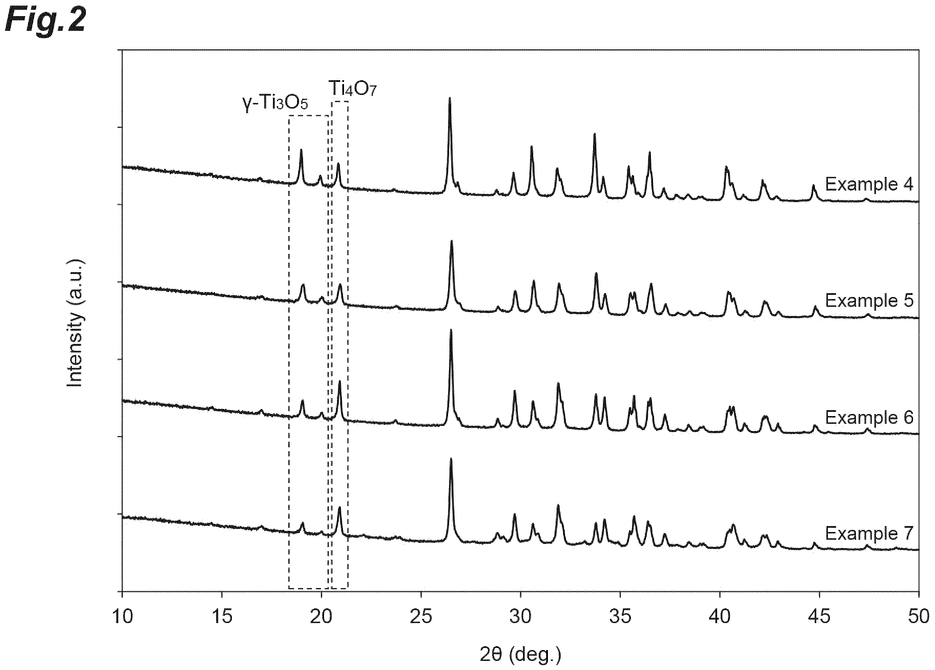

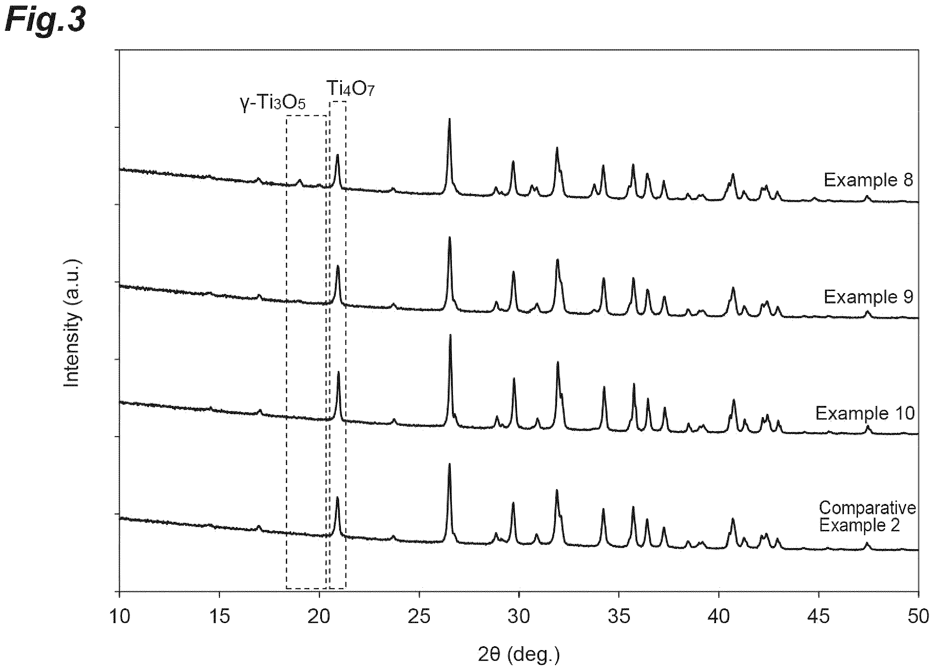

Each of the particles of Examples and Comparative Examples were subjected to powder X-ray diffraction measurement. Specifically, a horizontal sample multipurpose X-ray diffractometer (RINT-UltimaIV manufactured by Rigaku Corporation) was used to measure a diffraction pattern under the following measurement conditions. The obtained X-ray diffraction patterns are shown in FIGs. 1 to 3.

(Measurement Conditions)

X-ray source: Cu-K $\alpha$ radiation ($\lambda$ = 1.54184 Å)
Tube voltage: 40kV, tube current: 40 mA
Optical conditions for measurement: divergence slit = 2/3°
Scattering slit: 8 mm
Light-receiving slit = 0.15 mm
Position of diffraction peak = $2\theta$ (diffraction angle)

Scan speed: 4.0° (2θ)/min, continuous scan
Measurement range: 2θ = 10° to 80°

Subsequently, the mass fractions (% by mass) of $Ti_4O_7$ and $\gamma$-$Ti_3O_5$ in the obtained particles were calculated using Rietveld method software (integrated powder X-ray analysis software PDXL2 manufactured by Rigaku Corporation). From the crystal structure database (Pearson's Crystal Data), 1250094 (Journal of Solid State Chemistry 3, 340 (1971)) was used as the $Ti_4O_7$, and 1900755 (Journal of Solid State Chemistry 20, 29 (1977)) was used as the $\gamma$-$Ti_3O_5$. Further, from the mass fraction M1 of $\gamma$-$Ti_3O_5$ and the mass fraction M2 of $Ti_4O_7$, and the formula mass F1 (=223.60) of $\gamma$-$Ti_3O_5$ and the formula mass F2 (=303.46) of $Ti_4O_7$, the molar ratio of $\gamma$-$Ti_3O_5$ to $Ti_4O_7$ ($\gamma$-$Ti_3O_5$/$Ti_4O_7$) is was calculated by the following formula:

$$\text{Molar ratio } (\gamma\text{-}Ti_3O_5/Ti_4O_7) = (M1/F1)/(M2/F2)$$

The results are shown in Table 1.

<Measurement of chromaticity>

The chromaticity (L* value, a* value, and b* value in the L*a*b* color space) of each of the particles of Examples and Comparative Examples were measured using a colorimetric color difference meter ZE-2000 (manufactured by Nippon Denshoku Industries Co., Ltd.). More specifically, first, zero point correction was performed with a cylinder for dark field, and then standard matching was performed with a standard white plate (X=91.71, Y=93.56, Z=110.52). Next, 3 g of the particles were put into a round cell of 35φ×15H, and the chromaticity was measured. The results are shown in Table 1. As can be seen from the results of this test, by controlling the molar ratio of $\gamma$-$Ti_3O_5$ to $Ti_4O_7$ (y-$Ti_3O_5$/$Ti_4O_7$) within an appropriate range, it was possible to adjust the color to black with various chromaticities.

<Elemental Analysis>

Each of the particles in the above Examples 1 to 12 was subjected to elemental analysis using Agilent 5110ICP-OES (manufactured by Agilent Technologies, Inc.). To be specific, 0.1 g of the particles were weighed in a platinum crucible, 1 ml of each of HF and HCl were added thereto, and pressure acidolysis was performed at 150°C for 4 hours. Thereafter, the volume was fixed at 6 ml, and after confirming that there was no unnecessary residue, ICP emission spectral analysis was performed. The results are shown in Table 2. In Table 2, "ND" means that the value was equal to or less than the minimum limit of detection, and the numerical value in parentheses means that the value was equal to or less than the minimum limit of quantification. The minimum limit of detection and the minimum limit of quantification are as follows.

(Minimum limit of detection)

Li, Na, Mg, K, and Ca: 0.5 pp, by mass
P: 5 ppm by mass
Elements other than the above: 2 ppm by mass
(Minimum limit of quantification)
Li, Na, Mg, K and Ca: 2 ppm by mass
P: 10 ppm by mass
Elements other than the above: 5 ppm by mass

[Table 1]

| | Production condition | | | Properties of particles | | | | | | |
|---|---|---|---|---|---|---|---|---|---|---|
| | Molar ratio ($TiO_2/TiH_2$) | Heating time (hours) | Heating temperature (°C) | Crystal composition | Mass fraction (% by mass) | | Molar ratio ($\gamma$-$Ti_3O_5/Ti_4O_7$) | Chromaticity | | |
| | | | | | $Ti_4O_7$ | $\gamma$-$Ti_3O_5$ | | L* | * a | b* |
| Example 1 | 5.0 | 12 | 900 | $Ti_4O_7$, $\gamma$-$Ti_3O_5$ | 10.6 | 89.4 | 11.45 | 10.8 | 0.0 | -2.3 |
| Example 2 | 5.2 | 12 | 900 | $Ti_4O_7$, $\gamma$-$Ti_3O_5$ | 22.1 | 77.9 | 4.78 | 10.8 | -0.1 | -2.4 |
| Example 3 | 5.4 | 12 | 900 | $Ti_4O_7$, $\gamma$-$Ti_3O_5$ | 41 | 59 | 1.95 | 10.5 | -0.2 | -2.5 |
| Example 4 | 5.6 | 12 | 900 | $Ti_4O_7$, $\gamma$-$Ti_3O_5$ | 44.5 | 55.5 | 1.69 | 10.6 | -0.3 | -2.6 |
| Example 5 | 5.8 | 12 | 900 | $Ti_4O_7$, $\gamma$-$Ti_3O_5$ | 55 | 45 | 1.11 | 10.6 | -0.5 | -2.8 |
| Example 6 | 6.0 | 12 | 900 | $Ti_4O_7$, $\gamma$-$Ti_3O_5$ | 67.2 | 32.8 | 0.66 | 11 | -0.7 | -3.0 |
| Example 7 | 6.2 | 12 | 900 | $Ti_4O_7$, $\gamma$-$Ti_3O_5$ | 77.1 | 22.9 | 0.40 | 10.8 | -0.9 | -3.1 |
| Example 8 | 6.4 | 12 | 900 | $Ti_4O_7$, $\gamma$-$Ti_3O_5$ | 84 | 16 | 0.26 | 10.3 | -1.0 | -3.2 |
| Example 9 | 6.6 | 12 | 900 | $Ti_4O_7$, $\gamma$-$Ti_3O_5$ | 94.3 | 5.7 | 0.08 | 11.2 | -1.2 | -3.6 |
| Example 10 | 6.8 | 12 | 900 | $Ti_4O_7$, $\gamma$-$Ti_3O_5$ | 97.2 | 2.8 | 0.04 | 12.6 | -1.4 | -4.2 |
| Example 11 | 6.0 | 4 | 900 | $Ti_4O_7$, $\gamma$-$Ti_3O_5$ | 71.2 | 28.3 | 0.54 | 10.2 | -0.5 | -2.9 |
| Example 12 | 6.0 | 12 | 700 | $Ti_4O_7$, $\gamma$-$Ti_3O_5$ | 63.5 | 36.5 | 0.78 | 11.9 | -1.1 | -3.3 |
| Comp. Example 1 | 4.8 | 12 | 900 | $\gamma$-$Ti_3O_5$ | 0 | 100 | - | 10.8 | 0.4 | -2.1 |
| Comp. Example 2 | 7.0 | 12 | 900 | $Ti_4O_7$ | 100 | 0 | 0.00 | 13.2 | -1.5 | -4.3 |
| Comp. Example 3 | 6.0 | 12 | 600 | $Ti_2O_3$, $Ti_nO_{2n-1}$ (n>4) | - | - | - | 20.3 | -1.5 | -4.7 |
| Comp. Example 4 | 6.0 | 12 | 1000 | $Ti_4O_7$, $\alpha$-$Ti_3O_5$, $\beta$-$Ti_3O_5$ | - | - | - | 13.8 | -0.2 | -3.0 |

[Table 2]

| | Results of element analysis (ppm by mass) | | | | | | | | | | |
|---|---|---|---|---|---|---|---|---|---|---|---|
| | Al | B | Ba | Ca | Cd | Co | Cr | Cu | Fe | K | Li |
| Example 1 | 11 | ND | ND | ND | ND | ND | (3) | ND | 10 | ND | ND |
| Example 2 | 9 | ND | ND | ND | ND | ND | 6 | ND | 6 | ND | ND |
| Example 3 | 15 | ND | ND | 3 | ND | ND | 5 | ND | 9 | ND | ND |
| Example 4 | 13 | ND | ND | ND | ND | ND | (4) | ND | ND | ND | ND |
| Example 5 | 12 | ND | ND | ND | ND | ND | 5 | ND | ND | ND | ND |
| Example 6 | 8 | ND | ND | ND | ND | ND | 6 | ND | 11 | ND | ND |
| Example 7 | 10 | ND | ND | ND | ND | ND | 5 | ND | 8 | ND | ND |
| Example 8 | 19 | ND | ND | ND | ND | ND | (4) | ND | 9 | 3 | ND |
| Example 9 | 9 | 10 | ND | ND | ND | ND | (3) | ND | 9 | ND | ND |
| Example 10 | 14 | ND | ND | ND | ND | ND | ND | ND | ND | ND | ND |
| Example 11 | 11 | ND | ND | ND | ND | ND | ND | ND | ND | ND | ND |
| Example 12 | 6 | ND | ND | ND | ND | ND | ND | ND | ND | ND | ND |
| | Mg | Mn | Mo | Na | Ni | P | Pb | Sb | Si | Zn | Zr |
| Example 1 | ND | ND | ND | 9 | 4 | (7) | ND | ND | ND | ND | ND |
| Example 2 | ND | ND | ND | (1) | 9 | (6) | ND | 20 | ND | ND | ND |
| Example 3 | 3 | ND | ND | (2) | 6 | ND | ND | ND | 15 | ND | ND |
| Example 4 | ND | ND | ND | (2) | (4) | (6) | ND | ND | ND | ND | ND |
| Example 5 | ND | ND | ND | (1) | 6 | (7) | ND | ND | 12 | ND | ND |
| Example 6 | 5 | ND | ND | 8 | 7 | ND | ND | 15 | (2) | ND | ND |
| Example 7 | ND | ND | ND | 3 | ND | ND | ND | ND | 15 | ND | ND |
| Example 8 | ND | ND | ND | (1) | ND | (6) | ND | ND | ND | ND | ND |
| Example 9 | ND | ND | ND | (1) | ND | ND | ND | ND | (3) | ND | ND |
| Example 10 | ND | ND | ND | 2 | ND | ND | ND | ND | 18 | ND | ND |
| Example 11 | 3 | ND | ND | 4 | ND | ND | ND | ND | ND | ND | ND |
| Example 12 | ND | ND | ND | (2) | ND | ND | ND | ND | ND | ND | ND |

## Claims

1. A method for producing a particle, comprising a step of heating a mixture containing $TiH_2$ and $TiO_2$ at 700 to 950°C, wherein a molar ratio of the $TiH_2$ to the $TiO_2$ contained in the mixture is 5.0 to 6.8.

2. The method according to claim 1, wherein the mixture is heated under an Ar gas atmosphere in the step.

3. A particle having a crystal composition composed of $Ti_4O_7$ and $\gamma$-$Ti_3O_5$, wherein a molar ratio of the $Ti_4O_7$ to the $\gamma$-$Ti_3O_5$ is 0.01 or more.

4. The particle according to claim 3, wherein a* value is 0.2 or less and b* value is 0.0 or less in L*a*b* color space.

5. The particle according to claim 3 or 4, wherein a total content of Na, K and P in the particle is 2000 ppm by mass or less.

6. A dispersion comprising:

the particle according to any one of claims 3 to 5; and
a dispersion medium.

*Fig.1*

EP 4 282 825 A1

Fig.2

*Fig.3*

Intensity (a.u.)

2θ (deg.)

Example 8

Example 9

Example 10

Comparative Example 2

Ti$_4$O$_7$

γ-Ti$_3$O$_5$

*Fig.4*

## INTERNATIONAL SEARCH REPORT

| International application No. |
|---|
| **PCT/JP2022/001133** |

### A. CLASSIFICATION OF SUBJECT MATTER

*C01G 23/04*(2006.01)i
FI:  C01G23/04 Z

According to International Patent Classification (IPC) or to both national classification and IPC

### B. FIELDS SEARCHED

Minimum documentation searched (classification system followed by classification symbols)

C01G23/04, C09C1/00,C09C3/00, A61K8/00, A61Q1/00, C09D11/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JSTChina/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | WO 2019/182088 A1 (MITSUBISHI MATERIALS CORP) 26 September 2019 (2019-09-26) claims, paragraphs [0017], [0022], [0028], [0045]-[0058] | 1-5 |
| Y | | 6 |
| Y | JP 2010-272248 A (UNIV OF YAMANASHI) 02 December 2010 (2010-12-02) paragraph [0023] | 6 |
| Y | WO 2014/192728 A1 (SHOWA DENKO K.K) 04 December 2014 (2014-12-04) paragraphs [0004], [0070], [0103] | 6 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 March 2022** | **29 March 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/001133**

| Patent document cited in search report | Publication date (day/month/year) | Patent family member(s) | Publication date (day/month/year) |
|---|---|---|---|
| WO 2019/182088 A1 | 26 September 2019 | (Family: none) | |
| JP 2010-272248 A | 02 December 2010 | (Family: none) | |
| WO 2014/192728 A1 | 04 December 2014 | US 2016/0099473 A1<br>paragraphs [0004], [0123], [0196]<br>EP 3006106 A1<br>CN 105247723 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010280607 A
- JP 2012214348 A
- JP 2010030842 A

**Non-patent literature cited in the description**

- *Journal of Solid State Chemistry,* 1971, vol. 3, 340
- *Journal of Solid State Chemistry,* 1977, vol. 20, 29